# EUROPEAN PATENT APPLICATION

(11) **EP 3 926 364 A1**
(43) Date of publication of application: **22.12.2021**
(21) Application number: 21179821.0
(22) Date of filing: 16.06.2021
(51) Int. Cl.: G01S 13/06, G01S 13/86, G01S 13/87, G01S 13/937, G08G 3/02

(54) **SHIP TARGET OBJECT DETECTION SYSTEM, METHOD OF DETECTING SHIP TARGET OBJECT AND RELIABILITY ESTIMATING DEVICE**

(30) Priority: 18.06.2020 JP 2020104978
(71) Applicant: FURUNO ELECTRIC CO., LTD., Nishinomiya-City Hyogo 662-8580 (JP)
(72) Inventor: HARA, Yuichi, Nishinomiya-City, 662-8580 (JP); SAKAMOTO, Masaki, Nishinomiya-City, 662-8580 (JP)
(74) Representative: Müller Hoffmann & Partner

(57) **Abstract**

A ship target object detection system comprises a reliability estimating device that includes a plurality of candidate data generating parts, a same candidate selecting part and an existence reliability calculating part. The plurality of candidate data generating parts being any of a radar, a communication device receiving information on other ships, a sonar, a set of an image sensor, each generates (S11) target object candidate data including position data of a target object candidate existing around a ship. The same candidate selecting part selects (S12) a plurality of target object candidate data indicative of the same target object candidates based on the position data from the generated target object candidate data. The existence reliability calculating part calculates (S13) an existence reliability of the same target object candidates based on attributes of the plurality of candidate data generating parts that generated the plurality of selected target object candidate data. The reliability estimating device 1 may calculate (S14) the classification reliability of the target object candidate based on the classification data included in the target object candidate data and the attribute of the candidate data generating part which generated the target object candidate data, and may calculate (S15) an evading navigation plan route based on the target object candidate data stored in the common candidate administration database, the existence reliability, and the classification reliability. If the evading navigation is necessary (S16: YES), the reliability estimating device 1 may perform (S17) an evading navigation control by using an autopilot.

## Description

### Technical Field

The present disclosure relates to a ship target object detection system, a method of detecting a ship target object, a reliability estimating device, and a program.

### Background

JP3794641B2 discloses an AIS device for a ship, which is also mounted with an ARPA radar device, is connected to the ARPA radar device through an interface. The AIS device uses a method of comparing, every moment, receiving dynamic information on nearby ships with radar symbol information acquired from the ARPA radar device. The radar symbol information to which no dynamic information is matched up in a given way is used as transmission stop alert information, and, on the other hand, dynamic information to which no radar symbol information is matched up in a given way is used as non-substantial report alert information. These alert information are displayed on a display unit to urge the alerts to an operator, and the alert information is converted into reports and transmitted to the nearby ships.

A radar detects a target object which exists around the ship, such as another ship, a buoy, land, an iceberg, and a floating container. However, it may also inappropriately detect noise as the target object.

### Summary

The present disclosure is made in view of the problem, and one purpose thereof is to provide a ship target object detection system, a method of detecting a ship target object, a reliability estimating device, and a program, capable of easily estimating a reliability of the existence of the target object.

According to one aspect of the present disclosure, a ship target object detection system is provided, which includes a plurality of candidate data generating parts, a same candidate selecting part, and an existence reliability calculating part. The plurality of candidate data generating parts each generates target object candidate data including position data of a target object candidate existing around a ship. The same candidate selecting part selects a plurality of target object candidate data indicative of the same target object candidates based on the position data from the target object candidate data generated by the plurality of candidate data generating parts. The existence reliability calculating part calculates an existence reliability of the same target object candidates based on attributes of the plurality of candidate data generating parts that generated the plurality of selected target object candidate data among the plurality of candidate data generating parts.

Further, according to another aspect of the present disclosure, a method of detecting a target object for a ship is provided, which includes the steps of generating, by each of a plurality of candidate data generating parts, target object candidate data including position data of a target object candidate existing around the ship, selecting a plurality of target object candidate data indicative of the same target object candidates based on the position data from the target object candidate data generated by the plurality of candidate data generating parts, and calculating an existence reliability of the same target object candidates based on attributes of the plurality of candidate data generating parts that generated the plurality of selected target object candidate data among the plurality of candidate data generating parts.

Further, according to still another aspect of the present disclosure, a reliability estimating device is provided, which includes a candidate data acquiring part, a same candidate selecting part, and an existence reliability calculating part. The candidate data acquiring part acquires target object candidate data generated by each of a plurality of candidate data generating parts, the target object candidate data including position data of a target object candidate existing around a ship. The same candidate selecting part selects a plurality of target object candidate data indicative of the same target object candidates based on the position data from the target object candidate data generated by the plurality of candidate data generating parts. The existence reliability calculating part calculates an existence reliability of the same target object candidates based on attributes of the plurality of candidate data generating parts that generated the plurality of selected target object candidate data among the plurality of candidate data generating parts.

Further, according to still another aspect of the present disclosure, a non-transitory computer-readable recording medium storing a program causing a processor of a device to execute processing is provided, the processor being configured to control operation of the device. The processing includes acquiring target object candidate data generated by each of a plurality of candidate data generating parts, the target object candidate data including position data of a target object candidate existing around a ship, selecting a plurality of target object candidate data indicative of the same target object candidates based on the position data from the target object candidate data generated by the plurality of candidate data generating parts, and calculating an existence reliability of the same target object candidates based on attributes of the plurality of candidate data generating parts that generated the plurality of selected target object candidate data among the plurality of candidate data generating parts.

According to the present disclosure, estimation of a reliability of the existence of a target object becomes easy.

### Brief Description of Drawings

The present disclosure is illustrated by way of example and not by way of limitation in the figures of the accompanying drawings, in which like reference numerals indicate like elements and in which:
Fig. 1 is a view illustrating one example of a configuration of a ship target object detection system according to one embodiment of the present disclosure;
Fig. 2 is a view illustrating one example of a configuration of a reliability estimating device according to this embodiment;
Fig. 3 is a view illustrating one example of a radar candidate administration DB;
Fig. 4 is a view illustrating one example of an AIS candidate administration DB;
Fig. 5 is a view illustrating one example of a sonar candidate administration DB;
Fig. 6 is a view illustrating one example of an image candidate administration DB;
Fig. 7 is a view illustrating one example of a common candidate administration DB; and
Fig. 8 is a view illustrating one example of a procedure of a method of detecting a target object for a ship according to this embodiment.

### Detailed Description

Hereinafter, one embodiment of the present disclosure is described with reference to the accompanying drawings.

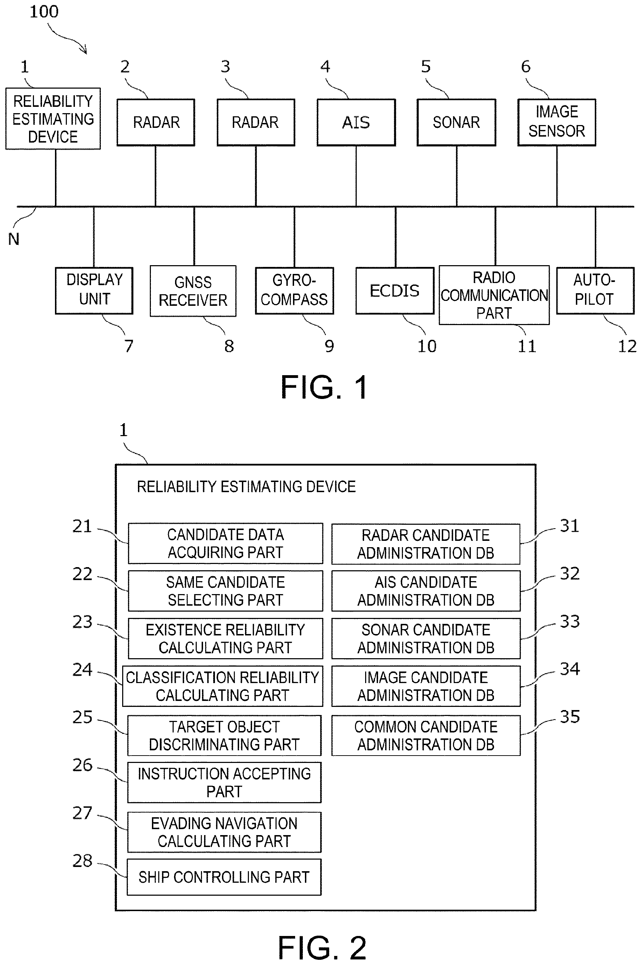

Fig. 1 is a block diagram illustrating one example of a configuration of a target object detection system 100 for a ship. The ship target object detection system 100 may be a system which is mounted on a ship (hereinafter, referred to as "the ship" in order to distinguish from other ships) and detects target objects which exist around the ship. Note that the present disclosure may be applied to ships which typically travel on water or sea which are referred to as surface ships, and may also be applied to other types of ships including boats, dinghies, watercrafts, and vessels.

The ship target object detection system 100 may include a reliability estimating device 1, a plurality of radars 2 and 3, an AIS 4, a sonar 5, an image sensor 6, a display unit 7, a GNSS receiver 8, a gyrocompass 9, an ECDIS 10, a radio communication part 11, and an autopilot 12. These devices may be connected to a network N, such as LAN, and may perform mutual network communications.

The reliability estimating device 1 may be a computer including a CPU, a RAM, a ROM, a nonvolatile memory, and an input/output interface. The CPU of the reliability estimating device 1 may perform information processing according to a program loaded to the RAM from the ROM or the nonvolatile memory.

The program may be supplied, for example, through an information storage medium, such as an optical disc or a memory card, or may be supplied, for example, through a communication network, such as the Internet or LAN.

In this embodiment, although the reliability estimating device 1 is an independent device, it is not limited to this configuration, and may be integral with other devices, such as the ECDIS 10. That is, the function of the reliability estimating device 1 may be incorporated into other devices, such as the ECDIS 10.

Fig. 2 is a block diagram illustrating one example of a configuration of the reliability estimating device 1. The reliability estimating device 1 may include a candidate data acquiring part 21, a same candidate selecting part 22, an existence reliability calculating part 23, a classification reliability calculating part 24, a target object discriminating part 25, an instruction accepting part 26, an evading navigation calculating part 27, and a ship controlling part 28. These functional parts may be implemented by the processing circuitry 20 or CPU of the reliability estimating device 1 executing the information processing according to the program.

The reliability estimating device 1 may further include a radar candidate administration DB 31, an AIS candidate administration DB 32, a sonar candidate administration DB 33, an image candidate administration DB 34, and a common candidate administration DB 35. These databases may be provided to the nonvolatile memory of the reliability estimating device 1. The databases are not limited to the configuration, but it may be provided externally and may be accessed through the communication network.

Returning to Fig. 1, each of the radars 2 and 3 may emit a microwave from an antenna, receive a reflection wave of the microwave, and generate an echo image based on the reception signal. The operating frequency of the radars 2 and 3 is X band (8-12GHz), S band (2-4GHz), or Ka band (26-40GHz), for example. Moreover, the radars 2 and 3 may detect a target object candidate which appears in an echo image, and generate a target object tracking data indicative of a position and a velocity vector of the target object candidate.

The AIS (Automatic Identification System) 4 may receive AIS data from other ships which exist around the ship. The AIS 4 may be one example of a communication device which receives other-ship information. It is not limited to the AIS, but a VDES (VHF Data Exchange System) may also be used. The AIS data may include an identification signal, a ship's name, a position, a course, a ship speed, and a destination, for example.

The sonar 5 may emit an ultrasonic wave in all horizontal directions from an ultrasonic transducer installed in the ship's bottom, receive the reflection wave, and generate an echo image based on the reception signal. Moreover, the sonar 5 may detect a target object candidate which appears in the echo image, and generate target object tracking data indicative of the position of the target object candidate. This function may be implemented by the reliability estimating device 1.

The image sensor 6 may be a camera, such as a visible light camera or an infrared camera, which captures overboard and generates an image. The image sensor 6 may be installed on the bridge of the ship so that it is turned to the bow direction. The image sensor 6 may be configured so that it pans, tilts, or zooms according to an operational input by a user.

The display unit 7 may be a display device with a touch sensor. The touch sensor may detect an instructed position in a screen by a finger etc. It is not limited to the touch sensor, but the instructed position may be inputted by using a trackball etc. The image captured by the image sensor 6 and the echo image generated by the radars 2 and 3 or the sonar 5 may be displayed on the display unit 7.

The GNSS receiver 8 may detect the position of the ship based on the radio wave received from a GNSS (Global Navigation Satellite System). The gyrocompass 9 may detect the heading (bow direction) of the ship. It is not limited to the gyrocompass, but a GPS compass or a magnetic compass may also be used.

The ECDIS (Electronic Chart Display and Information System) 10 may acquire the position of the ship from the GNSS receiver 8, and display the position of the ship on an electronic nautical chart. Moreover, the ECDIS 10 may also display a scheduled route which is set to sequentially follow a plurality of waypoints on the electronic nautical chart. It is not limited to the ECDIS, but a GNSS plotter may also be used.

The radio communication part 11 may include various radio equipment which implements communications with other ships or land base stations, such as radio equipment of the very high frequency wave band, the intermediate shortwave bands, and the shortwave bands. The radio communication part 11 may access, for example, an MICS (Maritime Information and Communication System) and acquire data, such as weather and tidal current.

The autopilot 12 may calculate a target steering angle for turning the bow to a schedule course based on the bearing of the bow (bow direction) acquired from the gyrocompass 9 and a schedule course acquired from the ECDIS 10, and drive a steering device so that the steering angle of the steering device approaches the target steering angle. Moreover, the autopilot 12 may control an engine of the ship.

Meanwhile, although the radars 2 and 3 detect, as a target object candidate, another ship, a buoy, land, an iceberg, a floating container, etc. which exist around the ship, it may also inappropriately detect noise etc. as the target object candidate. Since it is wasteful if the evading navigation is performed based on such an inappropriate data, it is important to grasp the existence of the target object appropriately. Moreover, the evading navigation may become more efficient if the classification of the target object can be grasped as well as the existence of the target object.

Therefore, in this embodiment, the existence reliability and the classification reliability of the target object candidate which exists around the ship may be calculated utilizing the plurality of candidate data generating parts, such as the radars 2 and 3, the AIS 4, and the sonar 5.

The radars 2 and 3, the AIS 4, and the sonar 5 may be examples of the candidate data generating parts which generate target object candidate data. The target object candidate data may include position data of the target object candidate. The target object candidate data may also include classification data of the target object candidate.

In detail, the radars 2 and 3 may generate target object tracking data indicative of the position of the target object candidate as the target object candidate data. The AIS 4 may generate AIS data indicative of the position and classification of another ship as the target object candidate data. The sonar 5 may generate target object tracking data indicative of the position of the target object candidate as the target object candidate data.

A set of the image sensor 6 and the target object discriminating part 25 may be also one example of the candidate data generating parts. By the target object discriminating part 25 discriminating the target object candidate in the image captured by the image sensor 6, the target object candidate data may be generated. The position of the target object candidate may be calculated based on an imaging direction of the image sensor 6 and the position of the target object candidate in the image. Moreover, the target object discriminating part 25 may also estimate the classification of the target object candidate.

The target object discriminating part 25 may estimate a range and a classification of the target object candidate in the image captured by the image sensor 6, by using a learned model which is generated in advance by machine learning in which the image is used as input data and the range and the classification of the target object in the image are used as teaching data. The learned model is an object detection model, such as YOLO (You Only Look Once) or SSD (Single Shot MultiBox Detector).

The instruction accepting part 26 which receives the user's instruction of the target object candidate in the image displayed on the display unit 7 may be also one example of the candidate data generating part. By the user instructing the target object candidate in the image captured by the image sensor 6 and displayed on the display unit 7, the target object candidate data may be generated. Alternatively, by the user instructing the target object candidate in the echo image generated by the radars 2 and 3 or the sonar 5 and displayed on the display unit 7, the target object candidate data may be generated.

Note that the reliability estimating device 1 may acquire, through the radio communication part 11, the target object candidate data generated by a radar etc. of another ship, and may use it for the calculation of the existence reliability. In this case, the radio communication part 11 may be one example of the communication device which receives the other-ship information, and become one example of the candidate data generating part.

As the plurality of candidate data generating parts, it may include two or more of the radar, the AIS, the sonar, and the image sensor, in order to detect the target object candidate multidirectionally. Moreover, since the radar excels in the detection of the target object candidate, the plurality of candidate data generating parts may include at least one radar.

Moreover, since the radar differs in the straightness and the attenuation depending on the wave length of the radio wave, the plurality of candidate data generating parts may include a plurality of radars with different frequency bands. It is not limited to the this configuration, but the plurality of candidate data generating parts may be a plurality of radars with the same frequency band and with different antenna installed locations.

Note that, a detector 2, 3, 5, 6 comprised of a radar 2, a radar 3, an image sensor 6, or a sonar 5, and configured to output detection data. Although the target object candidate data generated by the radars 2 and 3 or the sonar 5 generally does not include the classification data, the classification data may be included in the target object candidate data by combining with the target object discriminating part 25. That is, the target object discriminating part 25 may estimate the classification of the target object candidate which appears in the echo image generated by the radars 2 and 3 or the sonar 5.

In this case, the target object discriminating part 25 may estimate the range and the classification of the target object candidate in the echo image generated by the radars 2 and 3 or the sonar 5, by using the learned model which is generated in advance by machine learning in which the echo image is used as input data and the range and the classification of the target object in the echo image are used as teaching data.

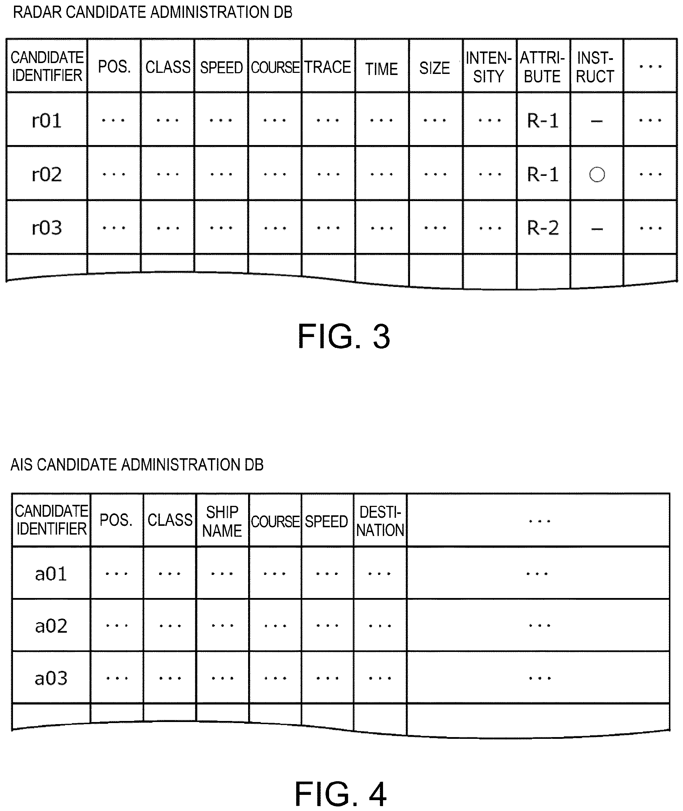

Fig. 3 is a view illustrating one example of the radar candidate administration DB 31. The radar candidate administration DB 31 may be a database for managing or administrating the target object candidate data generated by the radars 2 and 3. The radar candidate administration DB 31 may be stored in the computer(s) of the radars 2 and 3.

The radar candidate administration DB 31 includes, for example, fields of "candidate identifier," "position," "classification," "speed," "course," "trace," "time," "size," "intensity," "attribute," and "instruction."

The "candidate identifier" may be an identifier for identifying the target object candidate. The "position" may indicate the position of the target object candidate. The "classification" may indicate the classification of the target object candidate. In detail, the "classification" may be a classification of the target object candidate which is estimated by the target object discriminating part 25 based on the echo image.

The "speed," "course," and "trace" may indicate the speed, the course, and the trace of the target object candidate, respectively. The "time" may indicate an elapsed time from the detection of the target object candidate. The "size" may indicate the size of the image which appears in the echo image. The "intensity" may indicate a signal intensity of the reflection wave.

The "attribute" may indicate which radar among the plurality of radars 2 and 3 made the detection. The "instruction" may indicate that it is instructed by the user within the echo image displayed on the display unit 7.

Fig. 4 is a view illustrating one example of the AIS candidate administration DB 32. The AIS candidate administration DB 32 may be a database for managing or administrating the target object candidate data generated by the AIS 4. The AIS candidate administration DB 32 may be stored in the computer of the AIS 4. The AIS candidate administration DB 32 includes, for example, fields of "candidate identifier," "position," "classification," "ship's name," "course," "speed," and the "destination."

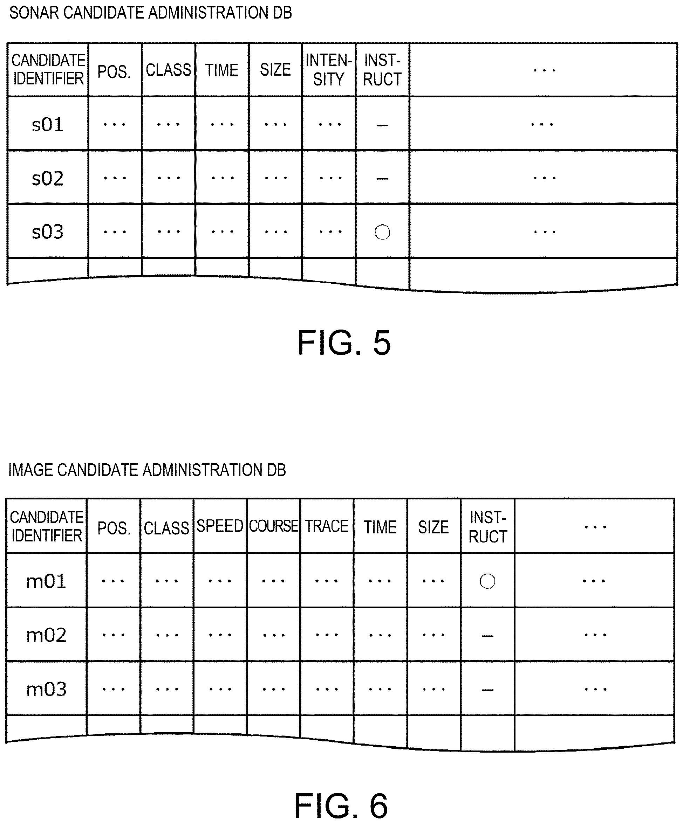

Fig. 5 is a view illustrating one example of the sonar candidate administration DB 33. The sonar candidate administration DB 33 may be a database for managing or administrating the target object candidate data generated by the sonar 5. The sonar candidate administration DB 33 may be stored in the computer of the sonar 5. The sonar candidate administration DB 33 includes, for example, fields of "candidate identifier," "position," "classification," "time," "size," "intensity," and "instruction."

Fig. 6 is a view illustrating one example of the image candidate administration DB 34. The image candidate administration DB 34 may be a database for managing or administrating the target object candidate data generated by the target object discriminating part 25 discriminating the target object candidate in the image captured by the image sensor 6. The image candidate administration DB 34 includes, for example, fields of "candidate identifier," "position," "classification," "speed," "course," "trace," "time," "size," and "instruction."

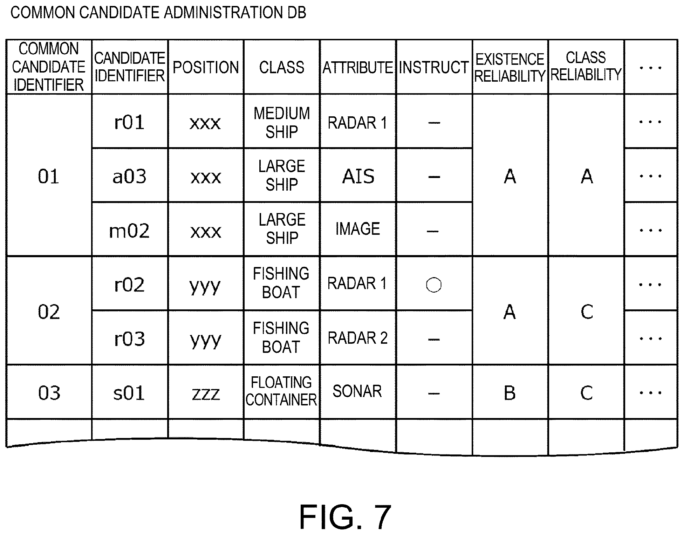

Fig. 7 is a view illustrating one example of the common candidate administration DB 35. The common candidate administration DB 35 is a host database for transversely managing or administrating the radar candidate administration DB 31, the AIS candidate administration DB 32, the sonar candidate administration DB 33, and the image candidate administration DB 34. The common candidate administration DB 35 includes, for example, fields of "common candidate identifier," "candidate identifier," "position," "classification," "attribute," "instruction," "existence reliability," and "classification reliability."

The "common candidate identifier" may be an identifier for identifying the common target object candidate. This common candidate identifier may bundle the candidate identifiers indicative of the same target object candidate. The "position" may indicate the position of the target object candidate. The same target object candidate may be determined by whether the position is common. The "classification" may indicate the classification of the target object candidate.

The "attribute" may indicate the attribute of the candidate data generating part which generates the target object candidate data. That is, the "attribute" may indicate which one among the radars 2 and 3, the AIS 4, the sonar 5, and the image sensor 6 made the detection. The "existence reliability" and the "classification reliability" may indicate the existence reliability and the classification reliability of the target object candidate, respectively (described later in detail).

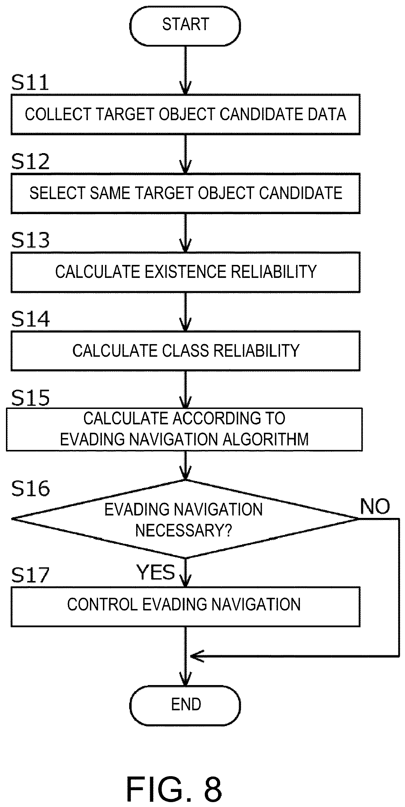

Fig. 8 is a flowchart illustrating one example of a procedure of a method of detecting the target object for a ship, which is implemented in the ship target object detection system 100. The reliability estimating device 1 may execute the information processing illustrated in this drawing according to the program.

First, the reliability estimating device 1 may collect the target object candidate data generated by each of the plurality of candidate data generating parts, such as the radars 2 and 3, the AIS 4, the sonar 5, and the image sensor 6 (S11: processing as the candidate data acquiring part 21). In detail, the reliability estimating device 1 may integrate the target object candidate data which are managed by the radar candidate administration DB 31, the AIS candidate administration DB 32, the sonar candidate administration DB 33, and the image candidate administration DB 34, into the common candidate administration DB 35.

Next, the reliability estimating device 1 may select a plurality of target object candidate data which indicate the same target object candidate, based on the position data included in the target object candidate data (S12: processing as the same candidate selecting part 22). In detail, the reliability estimating device 1 may select the plurality of target object candidate data of which the positions are common, from a large number of target object candidate data integrated into the common candidate administration DB 35, as data indicative of the same target object candidate, and give common candidate identifiers to these target object candidate data. Note that the reliability estimating device 1 may also give a common candidate identifier to independent target object candidate data of which the position is not common to others.

Next, the reliability estimating device 1 may calculate the existence reliability of the target object candidate based on the attribute of the candidate data generating part which generated the target object candidate data (S13: processing as the existence reliability calculating part 23). That is, the existence reliability may be calculated based on which of the radars 2 and 3, the AIS 4, the sonar 5, and the image sensor 6 generated the target object candidate data. The calculated existence reliability may be stored in the common candidate administration DB 35.

When a plurality of target object candidate data belong to one common candidate identifier, the reliability estimating device 1 may calculate the existence reliability based on the attribute of the plurality of candidate data generating parts which generated the target object candidate data. A weight indicative of the reliability is assigned to each of the radars 2 and 3, the AIS 4, the sonar 5, and the image sensor 6, and the existence reliability may be calculated by adding them.

For example, since the target object candidate data generated by the AIS 4 (AIS data) is data related to other ships received from other ships, it may set the weight of the AIS 4 higher than the weights of other candidate data generating parts, such as the radars 2 and 3.

Moreover, since the target object candidate data instructed by the user within the image displayed on the display unit 7 is a target object which is actually recognized by the user, it may set the weight of the instruction by the user higher than the weights of other candidate data generating parts.

Moreover, when the frequency bands of the radars 2 and 3 differ from each other, since the straightness and the directivity of the radio wave are higher as the wave length is shorter, and it is advantageous also in respect of the gain, it may set, for example, the weight of the radar of the X band higher than the weight of the radar of S band.

Moreover, when the installed positions of the antennas of the radars 2 and 3 differ from each other, since there are fewer obstructions onboard as the antenna is installed at a higher location, such as on the mainmast, it may set the weight of the radar higher as the antenna is installed at a higher location.

Note that, the existence reliability may be adjusted not only based on the attribute of the candidate data generating part, but also based on the speed, the trace, the time, the size, or the intensity of the target object candidate. For example, the existence reliability may be adjusted higher as the size of the target object candidate is larger, as the moving speed is larger, as the elapsed time from the detection is longer, or as the detection signal intensity is higher.

Moreover, when the target object candidate is located on the scheduled route of the ship, the existence reliability may be adjusted higher than the case where it is not located on the scheduled route.

Moreover, the existence reliability may be adjusted based on the nautical chart, weather, time, or tidal current. For example, when the target object candidate is within a traveling prohibited area, such as a land part and a seaweed culture net, on the nautical chart, the existence reliability may be adjusted higher, or during rain and night, the weight of the image sensor may be lowered and the weight of the radar may be raised.

Next, the reliability estimating device 1 may calculate the classification reliability of the target object candidate based on the classification data included in the target object candidate data and the attribute of the candidate data generating part which generated the target object candidate data (S14: processing as the classification reliability calculating part 24). That is, the classification reliability may be calculated based on the contents of the classification data, as well as based on which of the radars 2 and 3, the AIS 4, the sonar 5, and the image sensor 6 generated the classification data. The calculated classification reliability may be stored in the common candidate administration DB 35.

For example, since the target object candidate data generated by the AIS 4 (AIS data) includes identification signals of other ships as the classification data, the classification reliability may be estimated higher than other candidate data generating parts, such as the radars 2 and 3.

The classification data of the radars 2 and 3, the sonar 5, and the image sensor 6 may be the classifications of the target object candidates estimated by the target object discriminating part 25. The target object discriminating part 25 may estimate the classification related to, for example, the size of a ship, such as a small ship, a medium-size ship, a large ship, or a super-large ship, or may estimate the classification related to, for example, the type of a ship, such as a pleasure boat, a fishing boat, a merchant ship, or a tanker. Moreover, the target object discriminating part 25 may estimate the type of a water-surface floating object, such as a fishing net, a driftwood, a human, a drift ice, or a floating container.

Note that, the classification reliability may be adjusted not only based on the classification data included in the target object candidate data and the attribute of the candidate data generating part, but also based on the trace of the target object candidate, the position on the nautical chart, or the tidal current. For example, if the target object candidate goes in and out a fishing port, the target object is wondering around, or the target object travels unnaturally against the tidal current, since the possibility of being a fishing boat is high, the classification may be determined as a fishing boat. Moreover, if the course of the target object candidate deviates largely from the destination, the classification reliability of the AIS 4 may be lowered.

Next, the reliability estimating device 1 may perform a calculation according to the evading navigation algorithm based on the target object candidate data stored in the common candidate administration DB 35, the existence reliability, and the classification reliability to calculate an evading navigation plan route (S15: processing by the evading navigation calculating part 27).

As a result of the calculation according to the evading navigation algorithm, if the evading navigation is necessary (S16: YES), the reliability estimating device 1 may perform an evading navigation control by using the autopilot 12 so that the ship travels according to the evading navigation plan route (S17: processing as the ship controlling part 28).

According to the embodiment described above, it is possible to calculate the existence reliability of the target object candidate which exists around the ship by using the plurality of candidate data generating parts, such as the radars 2 and 3, the AIS 4, and the sonar 5, so as to perform the evading navigation while appropriately grasping the existence of the target object. Moreover, a more efficient evading navigation becomes possible by calculating the classification reliability of the target object candidate.

Note that, when the target object candidate data is obtained individually from each of the plurality of candidate data generating parts, such as the radars 2 and 3, the AIS 4, and the sonar 5, people may still have to determine the reliability after all, and the reliability may further vary depending on the situation. Therefore, like this embodiment, it becomes possible to offer an effective aid for the people and the evading navigation system by indexing the target object candidate data obtained from the plurality of candidate data generating parts, while complexly taking the attribute etc. into consideration.

Although the embodiment of the present disclosure is described, the present disclosure is not limited to the embodiment described above, and it is needless to say that various modifications are possible for the person skilled in the art.

Although in the above embodiment the existence reliability and the classification reliability which are calculated by the reliability estimating device 1 are used for the evading navigation application, they are not limited to this configuration but they may be used for a watching application. In detail, the reliability estimating device 1 may make the watch easier by changing a display mode of the target object candidate data according to the existence reliability and the classification reliability.

For example, a symbol of the target object candidate may be displayed brighter as the existence reliability is higher, or if the existence reliability is below a threshold, it may not be displayed. The threshold may be a fixed value or may be changed according to the situation, such as the weather and time.

The symbol of the target object candidate may be displayed on the screens of the radars 2 and 3, the ECDIS 10, or the display unit 7. Moreover, the symbol of the target object candidate may be displayed in AR (Augmented Reality) fashion on the image from the image sensor 6 displayed on the display unit 7.

Note that, as described above, upon calculating the existence reliability, when the target object candidate is located on the scheduled route of the ship, by adjusting the existence reliability higher than the case where the target object candidate is not located on the scheduled route, it becomes useful for the evading navigation application as well as the watch application.

### Description of Reference Characters

- 1: Reliability Estimating Device
- 2: Radar
- 3: Radar
- 4: AIS
- 5: Sonar
- 6: Image Sensor
- 7: Display Unit
- 8: GNSS Receiver
- 9: Gyrocompass
- 10: ECDIS
- 11: Radio Communicating Part
- 12: Autopilot
- 21: Candidate Data Acquiring Part
- 22: Same Candidate Selecting Part
- 23: Existence Reliability Calculating Part
- 24: Classification Reliability Calculating Part
- 25: Target Object Discriminating Part
- 26: Instruction Accepting Part
- 27: Evading Navigation Calculating Part
- 28: Ship Controlling Part
- 31: Radar Candidate Administration DB
- 32: AIS Candidate Administration DB
- 33: Sonar Candidate Administration DB
- 34: Image Candidate Administration DB
- 35: Common Candidate Administration DB
- 100: Ship Target Object Detection System

## Claims

1. A ship target object detection system (100), comprising:
a plurality of candidate data generating parts (2, 3, 4, 5, 6, 25, 26), each configured to generate target object candidate data including position data of a target object candidate existing around a ship;
a same candidate selecting part (22) configured to select a plurality of target object candidate data indicative of the same target object candidates based on the position data from the target object candidate data generated by the plurality of candidate data generating parts (2, 3, 4, 5, 6, 25, 26); and
an existence reliability calculating part (23) configured to calculate an existence reliability of the same target object candidates based on attributes of the plurality of candidate data generating parts (2, 3, 4, 5, 6, 25, 26) that generated the plurality of selected target object candidate data among the plurality of candidate data generating parts (2, 3, 4, 5, 6, 25, 26).

2. The ship target object detection system (100) of claim 1, wherein the target object candidate data further includes classification data of the target object candidate,
the system (100) further comprising a classification reliability calculating part (24) configured to calculate a classification reliability of the same target object candidate based on the classification data included in each of the plurality of selected target object candidate data and the attributes of the plurality of candidate data generating parts (2, 3, 4, 5, 6, 25, 26) that generated the plurality of selected target object candidate data.

3. The ship target object detection system (100) of claim 1 or 2, wherein one of the plurality of candidate data generating parts (2, 3, 4, 5, 6, 25, 26) is any of a radar (2, 3), a communication device (4) configured to receive information on other ships, a sonar (5), a set of an image sensor (6) configured to image overboard and a discriminating part (25) configured to discriminate the target object candidate in the image, and an instruction accepting part (26) configured to receive an instruction of the target object candidate in the image by a user.

4. The ship target object detection system (100) of any one of claims 1 to 3, wherein the plurality of candidate data generating parts (2, 3, 4, 5, 6, 25, 26) include two or more of a radar (2, 3), a communication device (4) configured to receive information on other ships, a sonar (5), a set of an image sensor (6) configured to image overboard and a discriminating part (25) configured to discriminate the target object candidate in the image, and an instruction accepting part (26) configured to receive an instruction of the target object candidate in the image by a user.

5. The ship target object detection system (100) of any one of claims 1 to 4, wherein the plurality of candidate data generating parts (2, 3, 4, 5, 6, 25, 26) include at least a radar (2, 3).

6. The ship target object detection system (100) of any one of claims 1 to 5, wherein the plurality of candidate data generating parts (2, 3, 4, 5, 6, 25, 26) include a plurality of radars (2, 3) with different frequency bands.

7. The ship target object detection system (100) of claim 2, wherein one of the plurality of candidate data generating parts (2, 3, 4, 5, 6, 25, 26) includes:
a detector (2, 3, 5, 6) comprised of a radar (2, 3), an image sensor (6), or a sonar (5), and configured to output detection data; and
a discriminating part (25) configured to estimate a classification of the target object candidate appearing in the detection data outputted from the detector (2, 3, 5, 6) by using a learned model generated in advance by machine learning, in which the detection data is used as input data and the classification of the target object is used as teaching data, and generate the classification data.

8. The ship target object detection system (100) of claim 7, wherein the discriminating part (25) estimates the size or the type of a ship as the classification of the target object candidate.

9. The ship target object detection system (100) of claim 7 or 8, wherein the discriminating part (25) estimates the type of a water-surface floating object as the classification of the target object candidate.

10. The ship target object detection system (100) of any one of claims 1 to 9, wherein the existence reliability calculating part (23) calculates the existence reliability based on one or two or more of size data indicative of the size of the target object candidate, speed data indicative of a moving speed, trace data indicative of a trace, time data indicative of an elapsed time from a detection, and intensity data indicative of the intensity of a detection signal, in addition to the attribute.

11. The ship target object detection system (100) of any one of claims 1 to 10, wherein the existence reliability calculating part (23) calculates the existence reliability higher when the target object candidate is located on a scheduled route than when the target object candidate is not located on the scheduled route.

12. The ship target object detection system (100) of any one of claims 1 to 11, wherein the existence reliability calculating part (23) calculates the existence reliability based on one or two or more of nautical chart data, tidal current data, and weather data, in addition to the attribute.

13. The ship target object detection system (100) of any one of claims 1 to 12, further comprising an evading navigation calculating part (27) configured to calculate an evading navigation plan route based on the target object candidate data of the target object candidate and the existence reliability.

14. The ship target object detection system (100) of claim 13, further comprising a ship controlling part (28) configured to control the ship according to the evading navigation plan route.

15. A method of detecting a target object for a ship, comprising the steps of:
generating, by each of a plurality of candidate data generating parts (2, 3, 4, 5, 6, 25, 26), target object candidate data including position data of a target object candidate existing around the ship;
selecting a plurality of target object candidate data indicative of the same target object candidates based on the position data from the target object candidate data generated by the plurality of candidate data generating parts (2, 3, 4, 5, 6, 25, 26); and
calculating an existence reliability of the same target object candidates based on attributes of the plurality of candidate data generating parts (2, 3, 4, 5, 6, 25, 26) that generated the plurality of selected target object candidate data among the plurality of candidate data generating parts (2, 3, 4, 5, 6, 25, 26).

16. A reliability estimating device (1), comprising:
a candidate data acquiring part (21) configured to acquire target object candidate data generated by each of a plurality of candidate data generating parts (2, 3, 4, 5, 6, 25, 26), the target object candidate data including position data of a target object candidate existing around a ship;
a same candidate selecting part (22) configured to select a plurality of target object candidate data indicative of the same target object candidates based on the position data from the target object candidate data generated by the plurality of candidate data generating parts (2, 3, 4, 5, 6, 25, 26); and
an existence reliability calculating part (23) configured to calculate an existence reliability of the same target object candidates based on attributes of the plurality of candidate data generating parts (2, 3, 4, 5, 6, 25, 26) that generated the plurality of selected target object candidate data among the plurality of candidate data generating parts (2, 3, 4, 5, 6, 25, 26).
